# EUROPÄISCHE PATENTSCHRIFT

(11) **EP 1 011 163 B1**
(45) Veröffentlichungstag und Bekanntmachung des Hinweises auf die Patenterteilung: **30.07.2003**
(21) Anmeldenummer: 99122354.6
(22) Anmeldetag: 10.11.1999
(51) Int. Cl.: H01M 6/46, H01M 6/12, H01M 10/04, H01M 2/26

(54) **Elektrischer Akkumulator in Form einer Knopfzelle**
Electric storage battery in the shape of a button cell
Accumulateur électrique sous forme bouton

(30) Priorität: 14.12.1998 DE 19857638
(43) Veröffentlichungstag der Anmeldung: 21.06.2000
(73) Patentinhaber: VARTA Microbattery GmbH, 30419 Hannover (DE)
(72) Erfinder: Kilb, Manfred, 73492 Rainau-Schwabsberg (DE); Ilic, Dejan, Dr., 73479 Ellwangen (DE); Pytlik, Eduard, 73479 Ellwangen (DE); Weitbrecht, Siegfried, 73430 Aalen (DE)
(74) Vertreter: Patentanwälte Ruff, Wilhelm, Beier, Dauster & Partner

(56) Entgegenhaltungen:
- EP-A- 0 637 852
- DE-A- 3 022 907
- US-A- 3 895 959
- US-A- 3 960 599

## Beschreibung

Die Erfindung betrifft einen elektrischen Akkumulator mit einem Gehäuse in Form einer gasdicht verschlossenen Knopfzelle, bestehend aus einem Gehäusedeckel und einem Gehäusenapf mit zwischenliegender elektrisch isolierender Dichtung, die einen Elektrodensatz aus positiven und negativen Elektroden, zwischenliegenden Separatoren sowie einen Elektrolyten enthalten. Die Erfindung betrifft weiterhin ein Verfahren zur Herstellung des Akkumulators.

Knopfzellen besitzen im allgemeinen ein flachzylindrisches oder ovales gasdichtes Gehäuse, in dem übereinander gegebenenfalls mehrere positive und mehrere negative Elektroden mit zwischenliegenden Separatoren sowie einem Elektrolyten angeordnet sind. Die Knopfzelle selbst besteht aus einem Gehäusenapf und einem Gehäusedeckel, zwischen denen eine elektrisch isolierende Kunststoffdichtung angeordnet ist. Üblicherweise ist der Gehäusenapf positiv und der Gehäusedeckel negativ gepolt. Die Elektroden vieler üblicher Knopfzellen sind sogenannte Masseelektroden in Form von gepreßten Pulvertabletten, die in einem feinmaschigen Reinnickeldrahtgewebe eingefaßt sind. Es ist auch bekannt, als Ausgangsmaterial pastierte Nickelschaumelektroden zu verwenden, aus denen die Knopfzellenelektroden ausgestanzt werden.

Unabhängig von der verwendeten Elektrodenart ist die elektrische Belastbarkeit derartiger üblicher Knopfzellen bei kontinuierlicher Entladung auf einen Wert von ca. 1 CA begrenzt, wobei unter 1 CA die Entladestromstärke verstanden wird, die eine Entladung der Zellenkapazität innerhalb einer Stunde gestattet. Diese Knopfzellen sind daher nur für bestimmte Anwendungen mit relativ geringem Strombedarf geeignet. Sie können daher übliche Rundzellen, die sehr viel höhere Entladeströme erlauben, nicht ersetzen. Knopfzellen, die mehrere Elektroden einer Polarität enthalten, sind in den verschiedensten Ausführungen bekannt, beispielsweise ist der DE-PS 3022907 eine Elektrodenanordnung zu entnehmen, bei der ein aus drei Elektroden bestehender Elektrodensatz vorhanden ist, bei dem die zwei außenliegenden Elektroden durch einen Ableiter miteinander verbunden sind und die mittlere Elektrode mit einem durch eine äußere Elektrode durchgeführten Kontaktstift versehen ist, über den sie elektrisch mit dem Gehäusedeckel verbunden ist.

Der GB-PS 1 512 211 ist eine Anordnung zu entnehmen, bei dem die an einer Stelle ihres Randes elektrisch verbundenen Elektroden unter Zwischenlage eines zickzackförmig gefalteten Separators ineinander plaziert werden.

Aus der DE-AS 1194471 ist ein gasdicht verschlossener Akkumulator bekannt, der zwei Sätze aufeinandergeschichteter Elektrodenplatten enthält, zwischen denen dünne Separatoren angeordnet sind. Dabei bilden die Elektrodenplatten eines jeden Satzes einen zusammenhängenden Streifen, der so gefaltet ist, daß die gefalteten Platten des anderen Plattensatzes zwischen den Platten des ersten Satzes unter Einschaltung der Separatoren liegen. Die in Reihe geschalteten Platten jedes Satzes sind mit zungenartigen, aus der Trägermetallfolie herausgeschnittenen Verbindungsfahnen versehen.

Bei den bekannten Ausführungsformen von Knopfzellen mit mehreren Elektrodenplatten einer Polarität ist in der Fertigung ein erhöhter Aufwand notwendig, um den Stapel während der verschiedenen Phasen der Fertigung in korrekter Lage zu halten und in der richtigen Reihenfolge in das Zellengehäuse einzubringen.

Der Erfindung liegt die Aufgabe zugrunde, einen elektrischen Akkumulator in Knopfzellenform anzugeben, der einerseits über eine erhöhte elektrische Leistung verfügt, und insoweit mit vergleichbaren Rundzellen und prismatischen Zellen vergleichbar ist, der jedoch darüber hinaus auf rationelle Weise automatenfreundlich herstellbar ist.

Diese Aufgabe wird erfindungsgemäß bei einem Akkumulator der eingangs angegebenen Art durch die im kennzeichnenden Teil des Anspruchs 1 angegebenen Merkmale gelöst. Weitere Ausgestaltungen der Erfindung und ein Verfahren zur Herstellung sind den Unteransprüchen zu entnehmen.

Erfindungsgemäß sind zumindest die Elektrodenplatten einer Polarität oder sowohl die positiven als auch die negativen Elektrodenplatten an mindestens zwei Stellen ihres Umfangs mechanisch und elektrisch derart verbunden, daß sich ein mechanisch stabiles Elektrodenpaket ergibt.

Vorzugsweise besteht der Elektrodensatz aus n Elektroden der einen und n + 1 Elektroden der anderen Polarität. Die Elektroden mit der niedrigeren Anzahl sind mit einer erfindungsgemäßen Kontaktplatte verbunden. N ist dabei eine natürliche Zahl zwischen 1 und etwa 15, wobei die maximale Anzahl an Elektroden von der Elektrodendicke limitiert wird. Die Kontaktplatte ist durch einen Separator elektrisch gegen die Elektroden der anderen Polarität isoliert, wenn n Elektroden der einen Polarität von n + 1 Elektroden der anderen Polarität eingeschlossen werden. Der vorgenannte Separator dient gleichzeitig als Elektrolytspeicher.

Die erfindungsgemäßen Elektroden besitzen einen leitfähigen Träger, der beispielsweise aus einem Streckmetall, einer metallischen Folie, einem metallischen Gitter, Netz, Vlies oder Schaum besteht, in welches das jeweilige Elektrodenmaterial, beispielsweise in einem Pastierverfahren oder einem Preßverfahren, eingebracht ist.

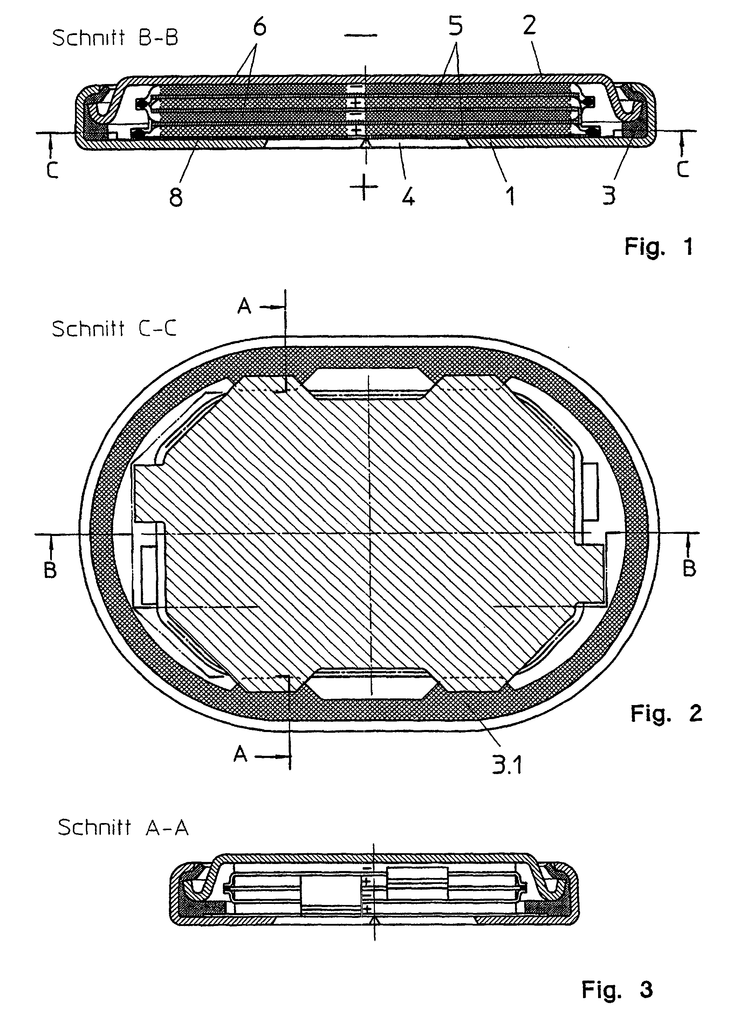

Im folgenden ist der Gegenstand der Erfindung anhand der Figuren 1 bis 8 näher erläutert.

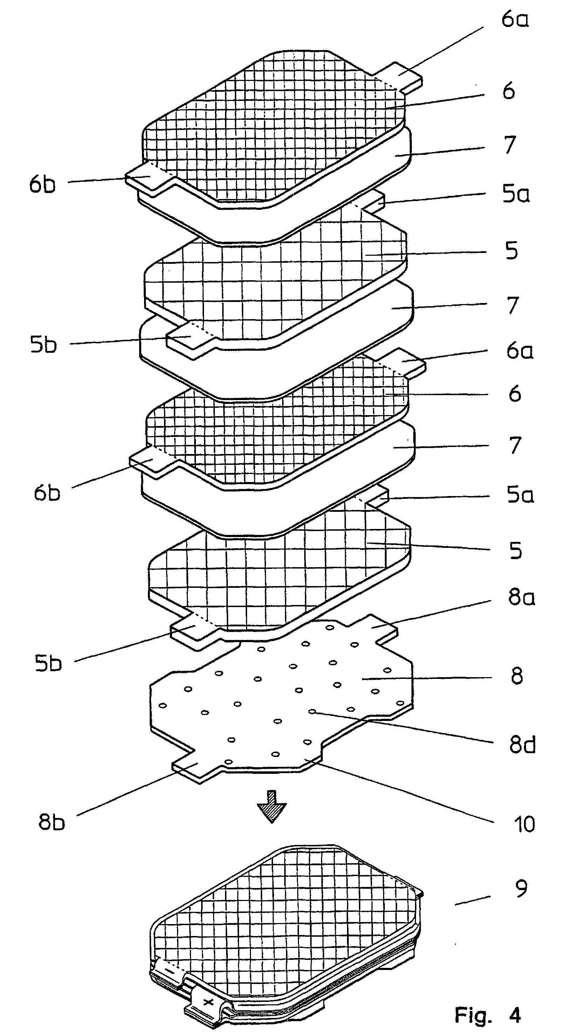

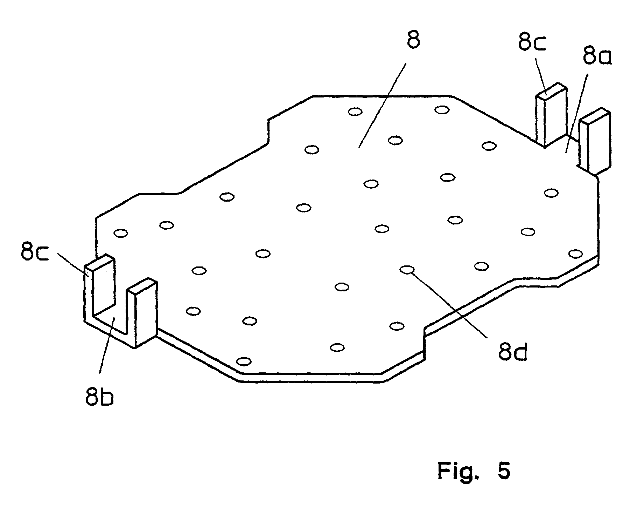

Dabei zeigt Figur 1 einen Querschnitt durch eine erfindungsgemäße Knopfzelle entlang der Line B-B der Figur 2. Figur 3 zeigt einen Schnitt entlang der Linie A-A in Figur 2. Der grundsätzliche Aufbau des Elektrodensatzes in dieser Zelle ist der Figur 4 zu entnehmen. Figur 5 zeigt eine mögliche Gestaltung einer Kontaktplatte, die beim erfindungsgemäßen Aufbau verwendet wird.

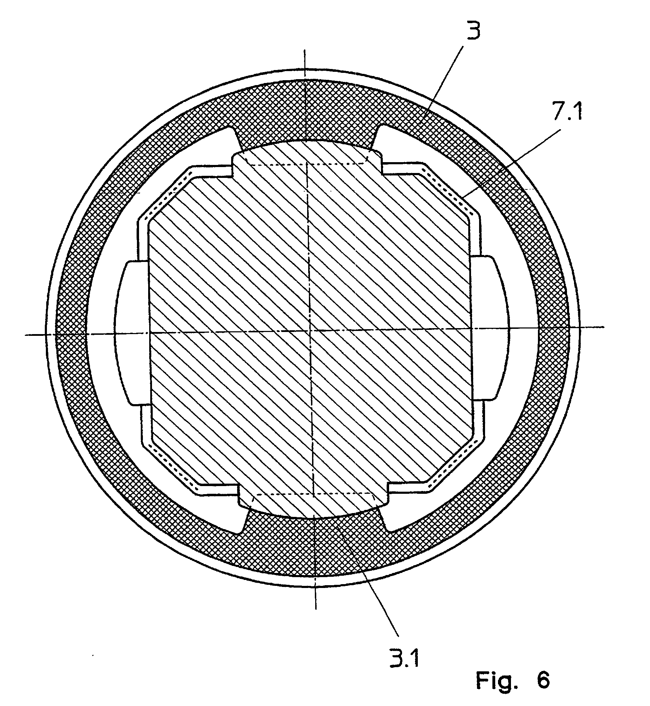

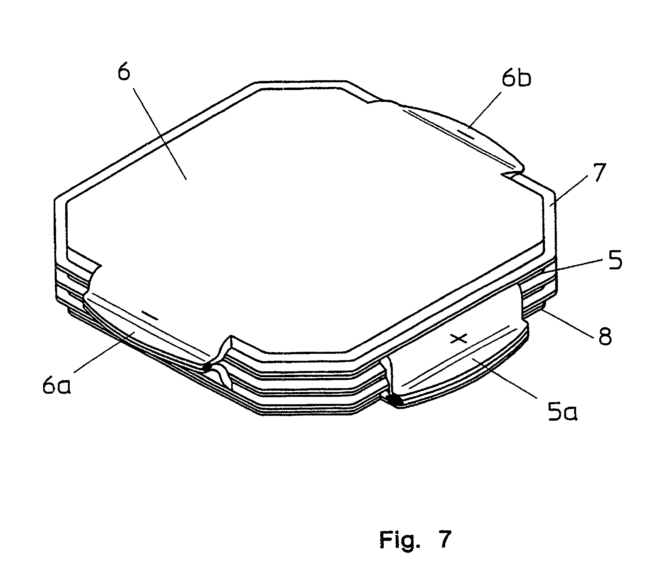

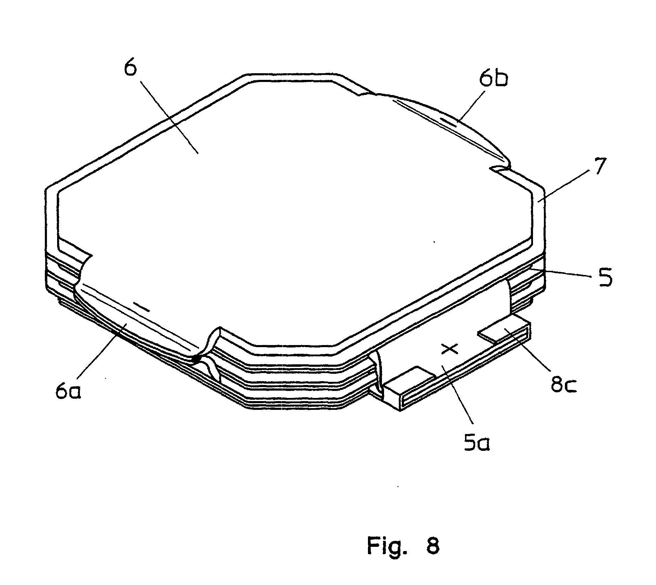

Figur 6 zeigt eine zylindrische Knopfzelle und die Figuren 7 und 8 zeigen dafür geeignete Elektrodenpakete.

Die erfindungsgemäße Knopfzelle besteht in an sich bekannter Weise gemäß Figur 1 aus einem Gehäusenapf (1) und einem Gehäusedeckel (2), zwischen denen eine elektrisch isolierende Dichtung (3) angeordnet ist und die durch einen Bördelvorgang gasdicht miteinander verbunden sind. Im Gehäusenapf (1) ist eine auch als Sollbruchstelle wirkende Einkerbung (4) in Form eines Plus-Zeichens vorhanden. Im Inneren des Gehäuses befindet sich neben dem üblichen Elektrolyten ein Elektrodensatz, der aus mindestens drei Elektroden besteht. Im Beispiel der Figur 1 sind zwei positive Elektroden (5) und zwei negative Elektroden (6) vorgesehen, die durch Separatoren (7) voneinander getrennt sind. Zusätzlich ist eine Kontaktplatte (8) vorgesehen.

Dieser erfindungsgemäße Aufbau ist näher aus Figur 4 zu ersehen. Erfindungsgemäß besitzen sowohl die positiven Elektroden (5) als auch die negativen Elektroden (6) jeweils mindestens zwei Ableiterzungen (5a, 5b und 6a, 6b), die am Umfang der Elektrode, beispielsweise an den gegenüberliegenden Seiten, diagonal versetzt angeordnet sind. Nach dem Stapeln von Elektroden (5,6), Separatoren (7) und Kontaktplatte (8) werden erfindungsgemäß die Zungen (6a und 6b) der negativen Elektroden durch einen Krimp- oder Schweißvorgang miteinander verbunden. Ebenso werden die Fahnen (5a und 5b) der positiven Elektrode miteinander verbunden, wobei gleichzeitig noch eine entsprechende Verbindung mit den Fahnen (8a und 8b) der Kontaktplatte (8) erfolgt. Das mit (9) in Figur 4 bezeichnete Elektrodenpaket ist nach der Herstellung dieser Verbindungen als kompletter Elektrodensatz leicht transportierbar und handhabbar und kann ohne besondere Schwierigkeiten in das Knopfzellengehäuse eingebaut werden.

Zusätzlich besitzt die Kontaktplatte (8) an ihrem Umfang verteilte Vorsprünge (10).

Dieses Elektrodenpaket (9), welches auch in Automaten leicht transportierbar und handhabbar ist, wird in den mit der Dichtung (3) versehenen Gehäusedeckel (2) eingebracht. Anschließend wird der Gehäusenapf (1) aufgebracht. Erfindungsgemäß besitzt die Dichtung (3) angespritzte Nocken (3.1), über die das Elektrodenpaket (9) bzw. die Vorsprünge (10) der Kontaktplatte (8) bei der Bördelung gegen den Gehäusenapf (1) gepreßt werden.

Die Verbindung der Ableiterzungen (5a, 5b und 6a, 6b) kann mit den verschiedensten bekannten Verfahren erfolgen. Besonders vorteilhaft ist es, eine Ultraschall-Schweißung oder eine Punktschweißung vorzunehmen. Es kann auch gegebenenfalls eine in Figur 5 schematisch dargestellte Kontaktplatte (8) Verwendung finden, die die Kontaktfahnen (8a und 8b) besitzt, die mit zusätzlichen Laschen (8c) versehen sind. In diese Laschen greifen dann die Fahnen (5a und 5b) der positiven Elektroden (5) ein, und durch einen Krimpvorgang können die Fahnen (5a und 5b) und Laschen (8c) elektrisch und mechanisch fest miteinander verbunden werden. Die Kontaktplatte (8) besitzt, um einen einwandfreien Elektrolytdurchtritt zum Elektrodenpaket hin zu gewährleisten, Öffnungen (8d).

Vorteilhaft ist es, die Separatorblätter (7) an ihren die Elektroden (5, 6) überragenden Rändern zumindest teilweise miteinander zu verschweißen.

Anstelle der ovalen, in Figur 1 bis 3 dargestellten Bauform kann eine erfindungsgemäße Zelle auch als zylindrische Zelle aufgebaut werden, wie dies aus Figur 6 ersichtlich ist.

In diesem Fall sind die nahezu quadratischen positiven Elektrodenplatten (5) an gegenüberliegenden Seiten miteinander verbunden, ebenso sind die negativen Elektrodenplatten (6) miteinander verbunden. Die Dichtung (3) enthält mindestens zwei Nocken (3.1) zum zusätzlichen Anpressen der Kontaktplatte (8) an den Boden des Zellennapfes (1). Die Separatorblätter (7) sind an den 4 Ecken (7.1) des Elektrodenpakets (9) miteinander verschweißt.

Der für diese zylindrische Knopfzelle geeignete Elektrodensatz (9) ist in Figur 7 näher dargestellt. Gemäß Figur 7 sind die negativen Elektroden (6) und die positiven Elektroden (5) jeweils mit Ableiterzungen (5a, 5b, 6a, 6b) versehen, die auf gegenüberliegenden Seiten liegen und miteinander verschweißt sind, wobei die positiven Elektroden (5) zusätzlich noch mit der unten liegenden Kontaktplatte (8) verschweißt sind. Gemäß Figur 8 sind die negativen Elektroden (6) in einem bekannten Schweiß- oder Ultraschall-Schweißverfahren miteinander verschweißt, während die Anschlußfahnen (5a, 5b) der positiven Elektroden (5) mit der Kontaktplatte (8) durch Krimpung mittels der Laschen (8c) miteinander verbunden sind.

Mit dem durch den erfindungsgemäßen Aufbau eines in sich stabilen und leicht handhabbaren Elektrodensatzes ist es möglich, die Stückzahl von positiven und negativen Elektroden praktisch beliebig zu ändern und damit die Kapazität der Zelle und die Baugröße innerhalb weiter Grenzen zu verändern. Durch die Verwendung einer Vielzahl dünner Elektroden ergibt sich die Möglichkeit, einen elektrischen Akkumulator zu bauen, der mit hohen Strömen belastbar ist. Die Belastbarkeit der erfindungsgemäßen Knopfzellen läßt sich durch die Verwendung von n Elektroden der einen und n + 1 Elektroden der anderen Polarität weiter verbessern.

Dadurch, daß die verwendeten Elektroden aus Bandelektroden ausgestanzt werden können, ergibt sich die Möglichkeit einer weitgehend automatisierten Fertigung mit nur geringen Ausschußmengen. Vorzugsweise wird die Elektrodenmasse pastenförmig mittels Rakeltechnik auf das Trägermaterial aufgebracht.

Die positiven Elektroden erfindungsgemäßer Akkumulatoren besitzen im wesentlichen Nickelhydroxid und die negativen Elektroden Cadmium oder eine wasserstoffspeichernde Legierung als aktive Masse oder die positiven Elektroden enthalten ein Lithium-ionenhaltiges Chalcogenid und die negativen Elektroden eine lithiumaufnehmende Verbindung als aktives Material. Als Elektrolyt dient im Falle einer Zelle mit positiven Nickelhydroxid und negativen Wasserstoffspeicherlegierungselektroden Kali-Lauge mit gegebenenfalls Zusätzen von Natriumhydroxid und Lithiumhydroxid.

## Patentansprüche

1. Elektrischer Akkumulator mit einem Gehäuse in Form einer gasdicht verschlossenen Knopfzelle, bestehend aus über eine elektrisch isolierende Dichtung verbundenem Gehäusenapf und Gehäusedeckel, die positive und negative Elektroden mit zwischenliegenden Separatoren sowie einen Elektrolyten enthalten, **dadurch gekennzeichnet, daß** im Gehäuse ein Elektrodensatz angeordnet ist, der mindestens zwei Elektroden einer Polarität enthält, die zwischen sich eine Elektrode der anderen Polarität einschließen und welche an mindestens zwei Stellen ihres Umfangs mechanisch und elektrisch derart verbunden sind, daß sich ein mechanisch stabiles Elektrodenpaket (9) ergibt.

2. Elektrischer Akkumulator nach Anspruch 1, **dadurch gekennzeichnet, daß** die Elektroden (5,6) einen leitfähigen Träger besitzen, der aus Streckmetall, einer Metallfolie, einem Metallgitter, einem Metallnetz, einem Metallvlies oder einem Metallschaum besteht.

3. Knopfzelle nach Anspruch 1 und/oder Anspruch 2, **dadurch gekennzeichnet, daß** mindestens die Elektroden einer Polarität mit einer elektrisch leitenden Kontaktplatte (8) verbunden sind.

4. Knopfzelle nach einem oder mehreren der Ansprüche 1 bis 3, **dadurch gekennzeichnet, daß** der Eletrodensatz aus n Elektroden der einen und n+1 Elektroden der anderen Polarität besteht, wobei die Elektroden mit der niedrigeren Anzahl mit einer Kontaktplatte (8) verbunden sind.

5. Knopfzelle nach einem der Ansprüche 1 bis 4, **dadurch gekennzeichnet, daß** die Kontaktplatte (8) Anschlußlaschen (8c) besitzt, mit denen die Anschlußfahnen (5a, 5b) der Elektroden (5) elektrisch verbunden sind.

6. Elektrischer Akkumulator nach einem oder mehreren der Ansprüche 1 bis 5, **dadurch gekennzeichnet, daß** die Kontaktplatte (8) Öffnungen (8d) und Vorsprünge (10) besitzt.

7. Elektrischer Akkumulator nach einem oder mehreren der Ansprüche 1 bis 6, **dadurch gekennzeichnet, daß** die Dichtung (3) mit Haltenocken (3.1) für die Vorsprünge (10) der Kontaktplatte (8) versehen ist.

8. Elektrischer Akkumulator nach einem oder mehreren der Ansprüche 1 bis 7, **dadurch gekennzeichnet, daß** die zwischen den Elektroden (5,6) liegenden Separatorblätter (7) an ihren die Elektroden (5,6) überragenden Rändern zumindest teilweise miteinander verschweißt sind.

9. Elektrischer Akkumulator nach einem oder mehreren der Ansprüche 1 bis 8, **dadurch gekennzeichnet, daß** die positiven Elektroden als aktive Masse Nickelhydroxid und die negativen Elektroden eine Wasserstoffspeicherlegierung oder Cadmium als aktives Material enthalten oder daß die positiven Elektroden als aktive Masse ein Lithium-lonen enthaltendes Chalcogenid und die negativen Elektroden eine lithiumaufnehmende Verbindung als aktives Material enthalten.

10. Verfahren zur Herstellung eines elektrischen Akkumulators nach einem oder mehreren der Ansprüche 1 bis 9, **dadurch gekennzeichnet,**
**daß** Elektrodenbänder hergestellt und in Elektrodenplatten geteilt werden,
**daß** die positiven und negativen Elektroden (5,6) unter Zwischenlage von Separatorblättern (7) aufeinandergestapelt und sowohl die positiven als auch die negativen Elektroden (5,6) an jeweils zwei Stellen ihres Umfangs miteinander verbunden werden,
**daß** das so erhaltene Elektrodenpaket (9) mit Elektrolyt getränkt und in den mit der Dichtung (3) versehenen Zellendeckel (2) eingelegt wird und
**daß** nach Aufbringen des Zellenbechers (1) die Behälterteile gasdicht miteinander verbördelt werden.

## Claims

1. Electrical accumulator with a housing in the form of a button cell with a gas-tight seal consisting of a housing cup and housing cover connected by an electrically insulating seal and containing positive and negative electrodes with separators between them, and an electrolyte, whereby an electrode set is arranged in the housing containing at least two electrodes of one polarity with an electrode of the other polarity between them, and linked mechanically and electrically at at least two points on their circumference so as to form a mechanically robust electrode package (9).

2. Electrical accumulator according to claim 1 **characterized in that** the electrodes (5, 6) have a conductive carrier consisting of expanded metal, metallic foil, metal mesh. metal network, metal fleece or metal foam.

3. Button cell according to claim 1 and/or claim 2 **characterized in that** at least the electrodes of one polarity are connected to an electrically conductive contact plate (8)

4. Button cell according to one or more of claims 1 to 3 **characterized in that** the electrode set consists of n electrodes of one polarity and n + 1 electrodes of the other polarity, the electrodes that are fewer in number being connected to a contact plate (8)

5. Button cell according to one of claims 1 to 4 **characterized in that** the contact plate (8) has connecting lugs (8c) electrically connecting the connecting lugs (5a, 5b) of the electrodes (5)

6. Electrical accumulator according to one or more of claims 1 to 5, **characterized in that** the contact plate (8) has openings (8d) and projections (10).

7. Electrical accumulator according to one or more of claims 1 to 6 **characterized in that** the seal (3) has holding cams (3.1) for the projections (10) of the contact plate (8).

8. Electrical accumulator according to one or more of claims 1 to 7**characterized in that** the separator sheets (7) between the electrodes (5, 6) are welded together at least partly at their edges protruding above the electrodes (5, 6).

9. Electrical accumulator according to one or more of claims 1 to 8, **characterized in that** the positive electrodes contain nickel hydroxide as active mass and the negative electrodes contain a hydrogen storage alloy or cadmium as active material, or whereby the positive electrodes contain a chalcogenide containing lithium ions as active mass, and the negative electrodes contain a lithium absorbing compound as active material.

10. Process for manufacturing an electrical accumulator according to one or more of claims 1 to 9 **characterized in that** the electrode strips are manufactured and split into electrode plates, and whereby the positive and negative electrodes (5, 6) are stacked with separator sheets (7) between them, and both the positive and the negative electrodes (5, 6) are each linked together at two points on their circumference, and whereby the resultant electrode package (9) is soaked with electrolyte and placed in the cell cover (2) fitted with the seal (3) and whereby the container parts are crimped together gas-tight when the cell cup (1) has been fitted

## Revendications

1. Pile électrique avec un boîtier en forme de bouton fermé hermétiquement, se composant d'un godet de boîtier assemblé à un joint électriquement isolant et d'un couvercle de boîtier, qui contiennent des électrodes positives et négatives avec des séparateurs intercalés ainsi qu'un électrolyte,
**caractérisée en ce qu'**
un ensemble d'électrodes est disposé dans le boîtier et comprend au moins deux électrodes d'une polarité qui enferment entre elles une électrode de l'autre polarité, et qui sont mécaniquement et électriquement assemblées en au moins deux points de leur périphérie, de telle façon qu'il se forme un paquet d'électrodes (9) mécaniquement stable.

2. Pile électrique selon la revendication 1,
**caractérisée en ce que**
les électrodes (5, 6) comportent un support conducteur, qui se compose d'un métal déployé, d'un film métallique, d'une grille métallique, d'un treillis métallique, d'un feutre métallique ou d'un métal cellulaire.

3. Pile bouton selon la revendication 1 et/ou la revendication 2,
**caractérisée en ce qu'**
au moins les électrodes d'une polarité sont raccordées à une plaque de contact électriquement conductrice (8).

4. Pile bouton selon une ou plusieurs des revendications 1 à 3,
**caractérisée en ce que**
l'ensemble d'électrodes se compose de n électrodes de la première polarité et de n+1 électrodes de l'autre polarité, les électrodes les moins nombreuses étant raccordées à une plaque de contact (8).

5. Pile bouton selon l'une quelconque des revendications 1 à 4,
**caractérisée en ce que**
la plaque de contact (8) comporte des lamelles de raccordement (8c), avec lesquelles les pattes de raccordement (5a, 5b) des électrodes (5) sont raccordées électriquement.

6. Pile électrique selon une ou plusieurs des revendications 1 à 5,
**caractérisée en ce que**
la plaque de contact (8) présente des ouvertures (8d) et des parties en saillie (10).

7. Pile électrique selon une ou plusieurs des revendications 1 à 6,
**caractérisée en ce que** le joint (3) est pourvu d'ergots de maintien (3.1) pour les parties en saillie (10) de la plaque de contact (8).

8. Pile électrique selon une ou plusieurs des revendications 1 à 7,
**caractérisée en ce que**
les feuilles de séparation (7) placées entre les électrodes (5, 6) sont au moins partiellement soudées l'une à l'autre sur leurs bords débordant des électrodes (5, 6).

9. Pile électrique selon une ou plusieurs des revendications 1 à 8,
**caractérisée en ce que**
les électrodes positives contiennent comme masse active de l'hydroxyde de nickel et les électrodes négatives contiennent comme matière active un alliage accumulateur d'hydrogène ou du cadmium, ou les électrodes positives contiennent comme masse active un chalcogénure contenant des ions lithium et les électrodes négatives contiennent comme matière active un composé captant le lithium.

10. Procédé pour la fabrication d'une pile électrique selon une ou plusieurs des revendications 1 à 9,
**caractérisé en ce qu'**
- on fabrique des bandes d'électrodes et on les divise en plaques d'électrodes,
- on empile l'une sur l'autre les électrodes positives et négatives (5, 6) en intercalant des feuilles de séparation (7), et on raccorde les unes aux autres aussi bien les électrodes positives que les électrodes négatives (5, 6) en au moins deux points de leurs périphéries respectives,
- on imprègne le paquet d'électrodes ainsi obtenu (9) avec un électrolyte et on le place dans le couvercle de pile (2) pourvu du joint (3), et
- après la pose du godet de la pile (1), on agrafe les parties du boîtier hermétiquement l'une à l'autre.
